# EUROPÄISCHE PATENTANMELDUNG

(11) **EP 1 500 891 A1**
(43) Veröffentlichungstag der Anmeldung: **26.01.2005**
(21) Anmeldenummer: 03016948.6
(22) Anmeldetag: 25.07.2003
(51) Int. Cl.: F28C 1/10

(54) **Dämpfungsvorrichtung**

(71) Anmelder: Balcke-Dürr GmbH, 46049 Oberhausen (DE)
(72) Erfinder: Tesche, Walter, Dipl.-Ing., 40882 Mettmann (DE); Stuckenschneider, Gerd, Dipl.-Ing., 45277 Essen (DE)
(74) Vertreter: Lang, Friedrich, Dipl.-Ing.

(57) **Zusammenfassung**

Die Erfindung betrifft eine Dämpfungsvorrichtung für Naßkühleinrichtungen, insbesondere Naßkühltürme. Um eine Dämpfungsvorrichtung bereitzustellen, die unabhängig vom Fluidhöhenstand im Fluid aufnehmenden Sammelbecken einsetzbar ist, wird mit der Erfindung vorgeschlagen eine Dämpfungsvorrichtung, umfassend eine schwimmend gelagerte Trageinrichtung (1) und einen hieran angeordneten Aufpralldämpfer (2).

## Beschreibung

Die Erfindung betrifft eine Dämpfungsvorrichtung für Naßkühleinrichtungen, insbesondere Naßkühltürme.

Zur Rückkühlung eines vorerwärmten Fluids ist es aus dem Stand der Technik bekannt, Naßkühleinrichtungen, beispielsweise in Form sogenannter Naßkühltürme, einzusetzen. Das rückzukühlende Fluid wird zu diesem Zweck einer innerhalb der Naßkühleinrichtung angeordneten Verrieselungseinrichtung zugeführt, über die das zurückzukühlende Fluid unter Schwerkrafteinwirkung nach unten abströmt. Im Gegenstrom wird durch die Verrieselungsvorrichtung von außen zugeführte Kühlluft durchgeführt, die im direkten Wärmeaustausch mit dem zurückzukühlenden Fluid stehend dieses abkühlt. Infolge dieses Wärmeaustausches erwärmt sich die Kühlluft, die dann oberhalb der Verrieselungsvorrichtung abgeführt wird und für eine weitere Verwendung bedarfsgerecht zur Verfügung steht.

In nachteiliger Weise erzeugen Naßkühleinrichtungen der vorbeschriebenen Art durch das offene Verrieseln des rückzukühlenden Fluids über die Verrieselungsvorrichtung ein Geräusch, das eine nicht unerhebliche Lärmbelästigung für die Umgebung darstellt. Das Verrieselungsgeräusch entsteht dabei dadurch, daß das über die Verrieselungsvorrichtung verrieselnde Fluid aus einer gewissen Höhe, die abhängig von der Größe der Naßkühleinrichtung ist und etwa zwischen 3 bis 10 m betragen kann, auf die Oberfläche des Fluidspiegels des unterhalb der Verrieselungsvorrichtung angeordneten Sammelbeckens auftrifft.

Das infolge des Aufplatschens des zurückgekühlen Fluids auf den Fluidspiegel des Sammelbeckens entstehende Geräusch ist im Nahbereich der Naßkühleinrichtung pegelbestimmend und insbesondere im hohen Frequenzbereich gegenüber anderen Geräuschquellen, wie z. B. dem Ventilatorantrieb einer mechanisch belüfteten Naßkühleinrichtung, dominierend.

Zur Reduzierung des Geräuschpegels sind aus dem Stand der Technik Dämpfungsvorrichtungen in Form sogenannter Aufprallabschwächer bekannt, die mit Hilfe eines grobmaschigen Gestrickes, das beispielsweise eine Schichtdicke von etwa 20 cm bis 30 cm aufweisen kann, die aus der Verrieselungsvorrichtung herabfallenden Fluidtropfen abbremsen. Infolge des Auftreffens der herabfallenden Fluidtropfen auf das grobmaschige Gestrick der Dämpfungsvorrichtung werden diese in eine Vielzahl vergleichsweise kleiner Tropfen zerlegt, was zur Absorption der infolge der Schwerkrafteinwirkung erzeugten Aufprallenergie der Fluidtropfen führt. Die infolge ihrer Zerlegung abgebremsten Fluidtropfen gelangen sodann über die Maschenzwischenräume des grobmaschigen Gestricks in das darunter liegende Sammelbecken und werden von diesem aufgenommen. Messungen haben ergeben, daß mit Hilfe des Dämpfungsvorrichtungs-Gestricks der emittierte Schallleistungspegel um ca. 7dB(A) reduziert werden kann.

Die aus dem Stand der Technik bisher bekannt gewordenen Dämpfungsvorrichtungen weisen eine starre, fest am Sammelbecken der Naßkühleinrichtung verankerte Unterkonstruktion aus sogenannten pultförmig angeordneten Holzbrettern auf. Diese sogenannten Pulthauben sind mit relativ geringen Zwischenräumen, die ein Abfließen des abgefangenen Fluids ermöglichen, großflächig über der gesamten Fluidoberfläche des Sammelbeckens installiert. Bedingt durch diese Konstruktion ist ein Zugang zum Sammelbecken in nachteiliger Weise nicht mehr möglich. Für eine bestimmungsgemäße Verwendung vorbekannter Dämpfungsvorrichtungen ist es zudem erforderlich, daß die Unterkante der Pulthauben in unmittelbarer Nähe zur Fluidoberfläche des Sammelbeckens abschließt, damit die abgefangenen Fluidtropfen geräuscharm in das Sammelbecken abfließen können. Hierdurch bedingt ist bei einem Betrieb der Naßkühleinrichtung die Fluidstandshöhe im Sammelbecken konstant zu halten, da es ansonsten bei einem Absinken des Fluidspiegels zu einem Abtropfgeräusch infolge des von den Pulthauben abtropfenden Fluids käme. Auch eine Erhöhung des Fluidspiegels im Sammelbecken würde die Wirksamkeit der Dämpfungsvorrichtung herabsetzen oder gar vollständig eliminieren, da dann das Geräusch dämmende Gestrick überflutet und mithin unwirksam wäre.

Insgesamt ergeben sich mit Bezug auf die aus dem Stand der Technik vorbekannten Dämpfungsvorrichtungen folgende Nachteile:
- Unzugänglichkeit des Sammelbeckens wegen der starren, die gesamte Oberfläche des Sammelbeckens abdeckenden Pulthauben-Unterkonstruktion;
- eine Inspektion und Reinigung des Sammelbeckens ist aufgrund der Verankerung der Pulthauben-Unterkonstruktion mit dem Sammelbecken nur unter erheblichem Aufwand möglich und macht die Ausbildung entsprechender Inspektionsöffnungen erforderlich;
- der sich infolge des Betriebs der Naßkühleinrichtung im Sammelbecken nach und nach ansammelnde Schlamm kann aufgrund der fest verankerten Pulthauben-Unterkonstruktion nur schwerlich abgeführt werden;
- eine Reinigung des Gestricks zur Beseitigung von Ablagerungen, biologischem Wachstum, Fremdkörpern oder dergleichen ist nicht möglich, da die aus pultförmig angeordneten Holzbrettern bestehende Unterkonstruktion nicht begehbar ist;
- die Fluidstandshöhe im Sammelbecken ist konstant zu halten; und
- eine Nachrüstung bestehender Naßkühleinrichtungen ist nur mit hohem Aufwand und bei abgestellter Einrichtung möglich.

Ausgehend vom vorbeschriebenen Stand der Technik ist es **Aufgabe** der Erfindung, eine Dämpfungsvorrichtung für Naßkühleinrichtungen, insbesondere Naßkühltürme, bereitzustellen, die die vorgenannten Nachteile überwindet.

Zur **Lösung** dieser Aufgabe wird mit der Erfindung vorgeschlagen eine Dämpfungsvorrichtung für Naßkühleinrichtungen, insbesondere Naßkühltürme, umfassend eine schwimmend gelagerte Trageinrichtung und einen hieran angeordneten Aufpralldämpfer.

Die erfindungsgemäße Dämpfungsvorrichtung besteht aus einer Trageinrichtung einerseits und einem hieran angeordenten Aufpralldämpfer andererseits, wobei die Trageinrichtung als schwimmende Trageinrichtung ausgebildet auf der Fluidoberfläche des im Sammelbecken befindlichen Fluids schwimmt. Unabhängig von der Fluidstandshöhe im Sammelbecken wird so ein immer gleicher Abstand zwischen Fluidoberfläche und Trageinrichtung sichergestellt, so daß es bei einer Verwendung der erfindungsgemäßen Dämpfungsvorrichtung nicht erforderlich ist, die Fluidstandshöhe im Sammelbecken konstant zu halten. Vielmehr ist es möglich, diese in Abhängigkeit des Betriebs der Naßkühleinrichtung variieren zu lassen. Darüber hinaus kann die erfindungsgemäße Dämpfungsvorrichtung auch bei laufendem Kühlbetrieb, beispielsweise zu Reinigungszwecken, montiert bzw. demontiert werden, da die den Aufpralldämpfer tragende Trageinrichtung nicht starr mit dem Sammelbecken der Naßkühleinrichtung verankert ist. Hierdurch wird eine wesentlich vereinfachte Handhabung erreicht, denn ist es im Unterschied zu den aus dem Stand der Technik bekannten Dämpfungsvorrichtungen nicht erforderlich, aufwendige Auf- und Abbauarbeiten vorzunehmen. Die schwimmende Lagerung der Trageinrichtung ermöglicht ferner eine flexible Verwendung der erfindungsgemäßen Dämpfungsvorrichtung, die damit in jeder Art von Naßkühleinrichtung einsetzbar ist und zwar unabhängig von durch die Naßkühleinrichtung vorgegebenen baulichen Gegebenheiten.

Gemäß einem weiteren Merkmal der Erfindung umfaßt die Trageinrichtung eine Mehrzahl von miteinander verbindbaren Schwimmkörpern. Vorzugsweise sind diese Schwimmkörper als zylindrische Hohlkörper ausgebildet und bestehen aus einem vorzugsweise verrottungsfesten Kunststoff. Für eine Abdeckung des vom im Sammelbecken befindlichen Fluids gebildeten Fluidspiegels werden zur Ausbildung der Trageinrichtung bedarfsweise entsprechend viele Schwimmkörper miteinander verbunden, zu welchem Zweck die Trageinrichtung Verbindungselemente umfaßt. Nach dem Baukastenprinzip können so zu einer bedarfsgerechten Ausbildung der Trageinrichtung eine Mehrzahl von Schwimmkörpern miteinander kombiniert werden, wobei die Schwimmkörper mit Bezug auf ihre Längserstreckung parallel zueinander angeordnet und in ihrer relativen Lage zueinander mittels der Verbindungselemente lagesicher fixiert werden. Zur Anordnung der Verbindungselemente verfügen die Schwimmkörper über korrespondierend ausgebildete Verbinder, die vorzugsweise mit Ausnehmungen versehene Leisten sind, die in Längsrichtung der Schwimmkörper an diesen angeordnet sind. Alternativ kann auch vorgesehen sein, daß die Verbinder in Längserstreckung der Schwimmkörper an diesen angeordnete Ösen sind.

Für eine bedarfsgerechte Ausgestaltung der Trageinrichtung auch in Längsrichtung der Schwimmkörper verfügen diese über vorzugsweise stirnseitig angeordnete Kupplungselemente. Diese ermöglichen mit Bezug auf die Längserstreckung der Schwimmkörper eine stirnseitige Verbindung zweier in Längsrichtung benachbarter Schwimmkörper. Je nach Längserstreckung des abzudeckenden Sammelbeckens können so wahlweise mehrere Schwimmkörper in Längserstreckung hintereinander angeordnet und miteinander verbunden werden. Es versteht sich dabei von selbst, daß für eine weitgehendst vollständige Abdeckung des vom im Sammelbecken befindlichen Fluids gebildeten Fluidspiegels Schwimmkörper unterschiedlicher Größe Verwendung finden können.

Die Montage der aus Schwimmkörpern und Verbindungselementen bestehenden Trageinrichtung kann wie folgt vorgenommen werden: Vom Rand des Sammelbeckens aus werden entsprechend der Erstreckung des Sammelbeckens in Breitenrichtung mehrere Schwimmkörper parallel zu ihrer Längsachse auf die Fluidoberfläche aufgelegt und mittels einer entsprechenden Anzahl von Verbindungselementen miteinander verbunden. Die auf diese Weise miteinander verbundenen Schwimmkörper ergeben einen sogenannten Schuß eines längeren Streifens. Zur Ausbildung eines weiteren Streifens wird eine weitere gleiche Anzahl von Schwimmkörpern stirnseitig an den bereits zusammengefügten Schuß angekuppelt, nachgeschoben und ebenfalls mit Verbindungselementen verbunden. Auf diese Art wird Streifen für Streifen der schwimmfähigen Trageinrichtung hergestellt, der in Längenrichtung wie auch in Breitenrichtung derart ausgebildet wird, daß die fertiggestellte Trageinrichtung den Fluidspiegel weitestgehend vollständig abdeckt.

Erfindungsgemäß verfügt die Dämpfungsvorrichtung über einen Aufpralldämpfer in Form eines vorzugsweise mehrteiligen, aus Kunststofffäden oder Vlies bestehenden Gestricks, der lagesicher an der Trageinrichtung angeordnet ist. Zu diesem Zweck weisen die Schwimmkörper und/oder die Verbindungselemente auf ihrer dem Aufpralldämpfer zugewandten Seite Zapfen und/oder Zahnkämme auf, mittels derer der Aufpralldämpfer kraftschlüssig mit der Trageinrichtung verbindbar ist. Die Zapfen und/oder Zahnkämme greifen in den auf die Trageinrichtung aufgelegten Aufpralldämpfer ein, wodurch dieser in seiner Lage relativ zur Trageinrichtung fixiert ist. Ein ungewolltes Verrutschen des Aufpralldämpfers gegenüber der Trageinrichtung ist damit wirkungsvoll unterbunden.

Um ein Ablösen des Aufpralldämpfers von den Zapfen und/oder Zahnkämmen zu verhindern, kann gemäß einem weiteren Merkmal der Erfindung vorgesehen sein, daß nach einem Auflegen des Aufpralldämpfers auf die Trageinrichtung die Zapfen und/oder Zahnkämme mit Sicherungselementen versehen werden, z. B. in Form von Kunststoffscheiben, die jeweils auf das freie Ende der Zapfen und/oder Zahnkämme aufgesteckt werden. Der Aufpralldämpfer wird dann sicher nach Art einer Sandwichkonstruktion zwischen Trageinrichtung einerseits und Sicherungselement andererseits gehalten.

Für ein Aufbringen des Aufpralldämpfers auf die schwimmend gelagerte Trageinrichtung kann gemäß unterschiedlicher Montageschritte vorgegangen werden. So kann beispielsweise der Aufpralldämpfer mit jedem ausgebildeten Schuß der Trageinrichtung separat aufgelegt werden. Auch kann der Aufpralldämpfer als Rollenware ausgebildet sein und in der Breite jeweils eines Streifens kontinuierlich mit dem Herstellen der Schüsse der Trageinrichtung aufgelegt und vorgeschoben werden. Darüber hinaus besteht die Möglichkeit, auf die Schüsse der Trageinrichtung Planken aufzulegen, die begangen werden können, so daß der Aufpralldämpfer nach einer vollständigen Ausbildung der Trageinrichtung in seiner Gesamtheit auf diese aufgebracht werden kann. Die beiden zuerst genannten Möglichkeiten bieten den Vorteil, daß ein Auf- und Abbau der erfindungsgemäßen Dämpfungsvorrichtung auch bei laufendem Betrieb der Naßkühleinrichtung vorgenommen werden kann.

Insgesamt wird mit der erfindungsgemäßen Dämpfungsvorrichtung eine in allen Betriebszuständen der Naßkühleinrichtung wirksame Geräuschdämmung zur Verfügung gestellt, die in ihrer Größe variabel an die geometrischen Abmessungen des in der Naßkühleinrichtung angeordneten Sammelbeckens bedarfsgerecht angepaßt werden kann. Der Aufpralldämpfer der Dämpfungsvorrichtung ist sicher und unverrutschbar an der schwimmend gelagerten Trageinrichtung angeordnet, womit einer ungewollten Relativverschiebung zwischen Trageinrichtung einerseits und Aufpralldämpfer andererseits wirkungsvoll entgegengewirkt ist. Die schwimmend im Sammelbecken angeordnete Trageinrichtung folgt problemlos variablen Fluidstandsänderungen und kann während des Betriebs der Naßkühleinrichtung montiert bzw. demontiert werden, was die Möglichkeit eröffnet, regelmäßige Reinigungen durchzuführen. Hierdurch gefördert ist eine erfindungsgemäße Dämpfungsvorrichtung sehr viel langlebiger als die aus dem Stand der Technik vorbekannten Dämpfungsvorrichtungen. Zudem kann unter Verwendung entsprechender Planken, die auf die Trageinrichtung aufzulegen sind, die erfindungsgemäße Dämpfungsvorrichtung begangen werden.

Weitere Merkmale und Vorteile der Erfindung ergeben sich aus der Beschreibung anhand der Figuren. Dabei zeigen:
- Fig. 1:: in einer schematischen Schnittdarstellung die erfindungsgemäße Dämpfungsvorrichtung;
- Fig. 2:: in einer schematischen Schnittdarstellung die Trageinrichtung der erfindungsgemäßen Dämpfungsvorrichtung;
- Fig. 3:: in einer schematischen Perspektivdarstellung einen als zylindrischen Hohlkörper ausgebildeten Schwimmkörper und
- Fig. 4:: in einer schematischen Perspektivdarstellung ein Verbindungselement.

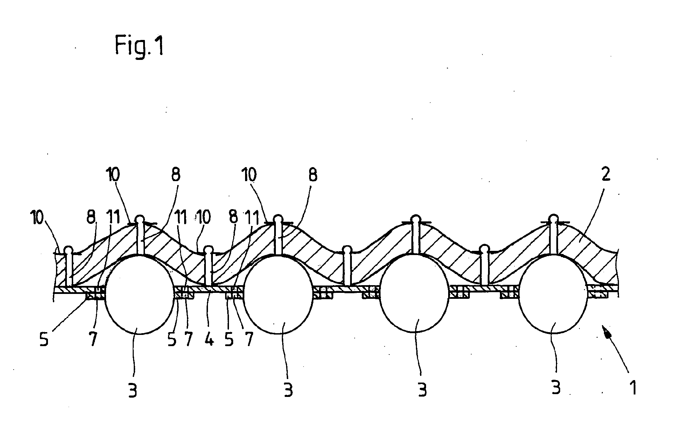

In einer schematischen Schnittdarstellung zeigt Fig. 1 in einer beispielhaften Ausgestaltung die erfindungsgemäße Dämpfungsvorrichtung in Form eines sogenannten Aufprallabschwächers. Gebildet ist dieser aus einer schwimmfähigen Trageinrichtung 1 sowie einem an der Trageinrichtung 1 angeordneten Aufpralldämpfer 2. Der Aufpralldämpfer 2 ist vorzugsweise ein mehrteiliges, aus Kunststofffäden oder Vlies bestehendes Gestrick, das unter Verwendung der Zapfen 8, was im weiteren noch näher beschrieben werden wird, unverrutschbar an der Trageinrichtung 1 angeordnet ist.

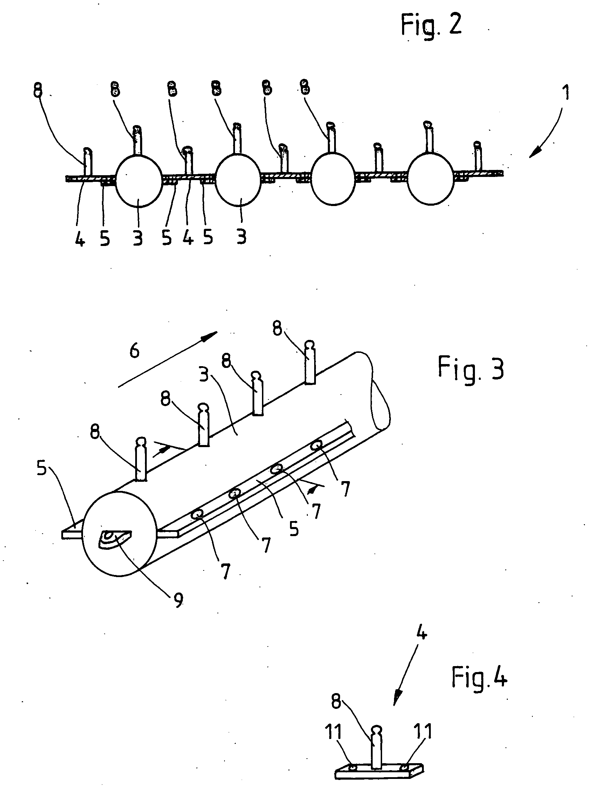

Gebildet ist die Trageinrichtung 1, wie insbesondere Fig. 2 entnommen werden kann, aus einer Mehrzahl von in Längs- und Breitenrichtung nebeneinander angeordneten Schwimmkörpern 3. Als Schwimmkörper 3 werden vorzugsweise zylindrisch ausgebildete Hohlkörper verwendet, die aus einem verrottungsfesten Kunststoff bestehen.

Die in Bezug auf ihre Längserstreckung 6 in Breitenrichtung parallel einander nebengeordneten Schwimmkörper 3 sind über Verbindungselemente 4 miteinander lösbar verbunden. Perspektivisch dargestellt ist ein Verbindungselement 4 expemplarisch in Fig. 4. Zur Ankoppelung mehrerer Verbindungselemente 4 an einem Schwimmkörper 3 weist dieser sich in Längsrichtung 6 erstreckende Verbinder in Form von Leisten 5 auf. Sowohl die Leisten 5 als auch die Verbindungselemente 4 verfügen über korrrespondierend ausgebildete Bohrungen 7 bzw. 11, in die zur Anordnung der Verbindungselemente 4 am Schwimmkörper 3 Befestigungsmittel in Form von Schrauben, Nieten, Bolzen oder dergleichen eingesteckt werden können.

Stirnseitig eines jeden Schwimmkörpers 3 ist ein Kupplungselement 9 angeordnet, wie dies am deutlichsten Fig. 3 entnommen werden kann. Das Kupplungselement 9 dient der Verbindung zweier in Längsrichtung 6 hintereinander angeordneter Schwimmkörper 3. Für eine stirnseitige Verbindung zweier Schwimmkörper 3 weisen die jeweiligen Kupplungselemente Bohrungen auf, die korrespondierend zueinander ausgebildet sind und der Aufnahme geeigneter Befestigungsmittel in Form von Schrauben, Nieten, Bolzen oder dergleichen dienen.

Auf ihrer dem Aufpralldämpfer 2 zugewandten Seite weisen sowohl die Schwimmkörper 3 als auch die Verbindungselemente 4 Zapfen 8 auf. Die Zapfen 8 dienen der lagesicheren Anordnung des Aufpralldämpfers 2 an der Trageinrichtung 1, so daß in vorteilhafter Weise eine ungewollte Relativbewegung zwischen Aufpralldämpfer 2 einerseits und Trageinrichtung 1 andererseits unterbunden ist.

Wie insbesondere Fig. 1 entnommen werden kann, durchragen die Zapfen 8 den auf die Trageinrichtung 1 aufgelegten Aufpralldämpfer 2 in Höhenrichtung. Zur sicheren Anordnung des Aufpralldämpfers 2 und zur Vermeidung eines ungewollten Abhebens des Aufpralldämpfers 2 von der Trageinrichtung 1 sind die Zapfen 8 an ihrem freien Ende mit einem Sicherungselement 10, beispielsweise in Form einer aufgepreßten Kunststoffscheibe, versehen. Einem Abrutschen des Aufpralldämpfers 2 von den Zapfen 8 ist hierdurch wirkungsvoll entgegengewirkt.

Je nach wunschgemäßer Größe der Dämpfungsvorrichtung sowohl in Längs- als auch in Breitenrichtung können zur Ausbildung der Trageinrichtung 1 mehrere Schwimmkörper 3 bedarfsgerecht miteinander kombiniert werden, wobei nach dem Baukastensystem Schwimmkörper 3 unterschiedlicher Größe miteinander kombiniert werden können. Dabei dienen die Verbindungselemente 4 zur Verkoppelung von in Breitenrichtung nebeneinander angeordneten Schwimmkörpern 3, wohingegen die Kopplungselemente 9 eine Verbindung von in Längsrichtung benachbarten Schwimmkörpern 3 gestatten. Insgesamt kann so eine sich sowohl in Breiten- als auch in Längsrichtung erstreckende Trageinrichtung 1 ausgebildet werden, die flächig den Aufpralldämpfer 2 aufnimmt.

Das vorbeschriebene Beispiel dient ausschließlich der Erläuterung und ist nicht beschränkend.

### Bezugszeichenliste:

- 1: Trageinrichtung
- 2: Aufpralldämpfer
- 3: Schwimmkörper
- 4: Verbindungselement
- 5: Leiste
- 6: Längsrichtung
- 7: Bohrung
- 8: Zapfen
- 9: Kupplungselement
- 10: Sicherungselement
- 11: Bohrung

## Patentansprüche

1. Dämpfungsvorrichtung für Naßkühleinrichtungen, insbesondere Naßkühltürme, umfassend eine schwimmend gelagerte Trageinrichtung (1) und einen hieran angeordneten Aufpralldämpfer (2).

2. Dämpfungsvorrichtung nach Anspruch 1, **dadurch gekennzeichnet, daß** die Trageinrichtung (1) eine Mehrzahl von miteinander verbindbaren Schwimmkörpern (3) umfaßt.

3. Dämpfungsvorrichtung nach Anspruch 2, **dadurch gekennzeichnet, daß** die Schwimmkörper (3) zylindrisch ausgebildete Hohlkörper sind.

4. Dämpfungsvorrichtung nach Anspruch 3, **dadurch gekennzeichnet, daß** die Hohlkörper aus vorzugsweise verrottungsfestem Kunststoff gebildet sind.

5. Dämpfungsvorrichtung nach einem der vorhergehenden Ansprüche 1 bis 4, **dadurch gekennzeichnet, daß** die Trageinrichtung (1) Verbindungselemente (4) für ein wahlweises Verbinden mehrerer Schwimmkörper (3) umfaßt.

6. Dämpfungsvorrichtung nach einem der vorhergehenden Ansprüche, **dadurch gekennzeichnet, daß** die Schwimmkörper (3) für eine Anordnung der Verbindungselemente (4) korrespondierend ausgebildete Verbinder aufweisen.

7. Dämpfungsvorrichtung nach Anspruch 6, **dadurch gekennzeichnet, daß** die Verbinder in Längsrichtung der Schwimmkörper (3) an diesen angeordnete und mit Ausnehmungen versehene Leisten sind.

8. Dämpfungsvorrichtung nach Anspruch 6, **dadurch gekennzeichnet, daß** die Verbinder in Längsrichtung der Schwimmkörper an diesen angeordnete Ösen sind.

9. Dämpfungsvorrichtung nach einem der vorhergehenden Ansprüche, **dadurch gekennzeichnet, daß** die Schwimmkörper (3) und/oder die Verbindungselemente (4) auf ihrer dem Aufpralldämpfer (2) zugewandten Seite Zapfen (8) und/oder Zahnkämme aufweisen.

10. Dämpfungsvorrichtung nach einem der vorhergehenden Ansprüche, **dadurch gekennzeichnet, daß** die Schwimmkörper (3) vorzugsweise stirnseitig Kupplungselemente (9) aufweisen.

11. Dämpfungsvorrichtung nach einem der vorhergehenden Ansprüche, **dadurch gekennzeichnet, daß** der Aufpralldämpfer (2) ein vorzugsweise mehrteiliges aus Kunststofffäden oder Vlies bestehendes Gestrick ist.
